(19) Europäisches Patentamt / European Patent Office / Office européen des brevets

(11) **EP 4 289 888 A1**

(12) **EUROPEAN PATENT APPLICATION**
published in accordance with Art. 153(4) EPC

(43) Date of publication:
**13.12.2023 Bulletin 2023/50**

(21) Application number: **22759488.4**

(22) Date of filing: **17.02.2022**

(51) International Patent Classification (IPC):
$C08J\ 3/24$ (2006.01)     $B01J\ 20/26$ (2006.01)
$B01J\ 20/30$ (2006.01)

(52) Cooperative Patent Classification (CPC):
**B01J 20/26; B01J 20/30; C08J 3/24**

(86) International application number:
**PCT/JP2022/006469**

(87) International publication number:
**WO 2022/181452 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021   JP 2021028403**

(71) Applicant: **SUMITOMO SEIKA Chemicals Co., Ltd.
Kako-gun, Hyogo 675-0145 (JP)**

(72) Inventor: **OKAZAWA Shiho
Himeji-shi, Hyogo 672-8076 (JP)**

(74) Representative: **Vossius & Partner
Patentanwälte Rechtsanwälte mbB
Siebertstraße 3
81675 München (DE)**

(54) **METHOD FOR PRODUCING WATER ABSORBENT RESIN PARTICLES**

(57)   The present invention relates to a method for producing water-absorbent resin particles, the method including crosslinking a polymer by a surface crosslinking agent by reacting the polymer with the surface crosslinking agent in a mixture of a powder of polymer particles containing the polymer and a crosslinking agent solution containing the surface crosslinking agent and water, in which the surface crosslinking agent includes an alkylene carbonate, a use amount (mass) of the surface crosslinking agent is 0.00110 or less with respect to a mass of 1 of a total amount of solid contents of the polymer particles, and a content (mass) of the alkylene carbonate is 0.009 or more and 0.027 or less with respect to a mass of 1 of water in the crosslinking agent solution.

*Fig.1*

## Description

### Technical Field

The present invention relates to a method for producing water-absorbent resin particles.

### Background Art

Patent Literature 1 discloses a method for producing surface crosslinked water-absorbent resin particles that can be used for absorbent articles such as sanitary products.

### Citation List

### Patent Literature

[Patent Literature 1] Japanese Unexamined Patent Publication No. 2020-516753

### Summary of Invention

### Technical Problem

It is known that in the production of the water-absorbent resin particles including polymer particles, the absorption performance of the water-absorbent resin particles under pressure is improved by surface crosslinking the polymer particles, but the method using surface crosslinking causes a decrease in a centrifuge retention capacity (CRC) which is basic water absorption performance of water-absorbent resin particles.

On the other hand, absorbent articles are required not only to have a high absorption amount but also to have little backflow of absorbed liquid, and water-absorbent resin particles that are better in such performance in general are required.

One aspect of the present invention has an object of providing a method for producing water-absorbent resin particles capable of generally exhibiting a suppression of a decrease in centrifuge retention capacity and an improvement of an absorption performance of the water-absorbent resin particles under pressure, that is, water-absorbent resin particles which are better in a total of the centrifuge retention capacity and the absorption performance under pressure.

### Solution to Problem

One aspect of the present invention relates to a method for producing water-absorbent resin particles including polymer particles. This method includes crosslinking a polymer by a surface crosslinking agent by reacting the polymer with the surface crosslinking agent in a mixture of a powder of polymer particles containing the polymer and a crosslinking agent solution containing the surface crosslinking agent and water, in which the surface crosslinking agent includes an alkylene carbonate, a use amount (mass) of the surface crosslinking agent is 0.00110 or less with respect to a mass of 1 of a total amount of solid contents of the polymer particles and a content (mass) of the alkylene carbonate is 0.009 or more and 0.027 or less with respect to a mass of 1 of water in the crosslinking agent solution.

### Advantageous Effects of Invention

According to one aspect of the present invention, it is possible to provide a method for producing water-absorbent resin particles capable of generally exhibiting a suppression of a decrease in centrifuge retention capacity and an improvement of an absorption performance of the water-absorbent resin particles under pressure, that is, water-absorbent resin particles which are better in a total of the centrifuge retention capacity and the absorption performance under pressure.

### Brief Description of Drawings

Fig. 1 is a cross-sectional view showing an embodiment of an absorbent article.
Fig. 2 is a schematic view showing a measurement device for a water absorption amount under load.

**Description of Embodiments**

Hereinafter, some embodiments of the present invention will be described in detail. However, the present invention is not limited to the following embodiments.

In the present specification, "(meth)acryl" means both acryl and methacryl. "Acrylate" and "methacrylate" are also referred to as "(meth)acrylate". The same also applies to other similar terms. "(Poly)" means both of a case where there is a prefix of "poly" and a case where there is no prefix thereof. In a numerical value range described in a stepwise manner in the present specification, an upper limit value or a lower limit value of a numerical value range in a certain step can be arbitrarily combined with an upper limit value or a lower limit value of a numerical value range in another step. In a numerical value range described in the present specification, the upper limit value or the lower limit value of the numerical value range may be replaced with a value shown in Examples. "Water-soluble" means that a solubility of 5% by mass or more in water at 25°C is exhibited. The materials exemplified in the present specification may be used alone or in combination of two or more kinds thereof. "Physiological saline" refers to a 0.9% by mass sodium chloride aqueous solution. "Room temperature" means 25°C.

One embodiment of the method for producing water-absorbent resin particles includes crosslinking a polymer by a surface crosslinking agent by reacting the polymer with the surface crosslinking agent in a mixture of a powder of polymer particles containing the polymer and a crosslinking agent solution containing the surface crosslinking agent and water.

The polymer forming the polymer particles may be any of polymers as long as it can impart water absorptivity to the polymer particles. The monomer constituting the polymer may be an ethylenically unsaturated monomer. The polymer may be a crosslinked polymer.

The ethylenically unsaturated monomer constituting the polymer may include, for example, at least one compound selected from the group consisting of (meth)acrylic acid and a salt thereof, 2-(meth)acrylamide-2-methylpropanesulfonic acid and a salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide. In a case where the ethylenically unsaturated monomer has an amino group, the amino group may be quaternized. The ethylenically unsaturated monomer constituting the polymer may include at least one compound selected from the group consisting of acrylic acid and a salt thereof, methacrylic acid and a salt thereof, acrylamide, methacrylamide, and N,N-dimethyl acrylamide, at least one compound selected from the group consisting of acrylic acid and a salt thereof, methacrylic acid and a salt thereof, and acrylamide, or at least one compound selected from the group consisting of acrylic acid and a salt thereof, and methacrylic acid and a salt thereof.

The polymer forming the polymer particles may have a functional group that reacts with a crosslinking agent. This functional group may be, for example, a carboxyl group, an amino group, or a combination thereof. The carboxyl group can be, for example, a group derived from acrylic acid, methacrylic acid, or a salt thereof.

The polymer may include a monomer unit derived from a monomer other than the ethylenically unsaturated monomer. The ratio of monomer units derived from the ethylenically unsaturated monomer (in particular, (meth)acrylic acid and a salt thereof) in the polymer may be 70% to 100% by mole with respect to the total amount of the monomers.

The polymer particles can be obtained by, for example, a polymerization method selected from a reverse phase suspension polymerization method, an aqueous solution polymerization method, a bulk polymerization method, and a precipitation polymerization method. Polymer particles (crosslinked polymer particles) including a crosslinked polymer can be obtained by self-crosslinking during polymerization, a reaction with an internal crosslinking agent, or a combination thereof.

An example of a method for obtaining polymer particles by the aqueous solution polymerization method includes polymerizing ethylenically unsaturated monomers in a monomer aqueous solution containing ethylenically unsaturated monomers, a radical polymerization initiator, and water to form a massive hydrogel-like polymer containing a polymer and water, coarsely crushing the hydrogel-like polymer to obtain a coarsely crushed product, drying the coarsely crushed product to obtain a dried product, and pulverizing the dried product to obtain polymer particles. The powder of the polymer particles after pulverization may be classified by a sieve or the like.

The radical polymerization initiator may include a persulfate, an azo compound, a peroxide, or a combination thereof. In a case where the azo compound is used as the radical polymerization initiator, there is a tendency that polymer particles exhibiting a large CRC are easily obtained. The azo compound may be combined with a peroxide.

Examples of the azo compound used as the radical polymerization initiator include 2,2'-azobis(2-amidinopropane) dihydrochloride, 2,2'-azobis{2-[1-(2-hydroxyethyl)-2)-imidazolin-2-yl]propane} dihydrochloride, 2,2'-azobis[N-(2-carboxyethyl)-2-methylpropionamidine] tetrahydrate, 2,2'-azobis[2-(2-imidazolin-2-yl)propane] dihydrochloride, 2,2'-azobis[2-(N-phenylamidino)propane] dihydrochloride, 2,2'-azobis[2-(N-allylamidino)propane] dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)-propionamide], and 4,4'-azobis(4-cyanovaleric acid). From the viewpoint of forming polymer particles with a large CRC, the radical polymerization initiator may include at least one azo compound selected from 2,2'-azobis(2-amidinopropane) dihydrochloride, 2,2'-azobis{2-[1-(2-hydroxyethyl)-2-imidazolin-2-yl]propane} dihydrochloride, 2,2'-azobis[N-(2-carboxyethyl)-2-methylpropionamidine] tetrahydrate, and 2,2'-azobis[2-(2-imidazolin-2-yl)propane] dihydrochloride.

Examples of the persulfate used as the radical polymerization initiator include potassium persulfate, ammonium persulfate, and sodium persulfate.

Examples of the peroxide used as the radical polymerization initiator include methyl ethyl ketone peroxide, methyl isobutyl ketone peroxide, di-t-butyl peroxide, t-butyl cumyl peroxide, t-butyl peroxyacetate, t-butyl peroxyisobutyrate, t-butyl peroxypivalate, and hydrogen peroxide.

In a case where the amount of the radical polymerization initiator in the monomer aqueous solution is small, there is a tendency that the CRC of the polymer particles is large. From this viewpoint, the amount of the radical polymerization initiator may be 0.01 to 15 mmol with respect to 1 mol of the monomer units constituting the polymer in the polymer particles.

The monomer aqueous solution may further include a chain transfer agent. The use of a chain transfer agent can also contribute to an increase in CRC of the polymer particles. The chain transfer agent may include, for example, hypophosphorous acid, phosphorous acid, or a combination thereof.

The monomer aqueous solution may include an internal crosslinking agent, and in that case, polymer particles including a crosslinked polymer crosslinked by the internal crosslinking agent can be obtained. The internal crosslinking agent may be a compound having two or more reactive functional groups (for example, polymerizable unsaturated groups).

The internal crosslinking agent may include a compound having a (meth)acrylic group, an allyl group, an epoxy group, or an amino group. In a case where these compounds having a reactive functional group are used as the internal crosslinking agent, there is a tendency that polymer particles exhibiting a large CRC are easily obtained. Examples of the compound having a (meth)acrylic group include (poly)ethylene glycol di(meth)acrylate, trimethylolpropane tri(meth)acrylate, and N,N'-methylenebis(meth)acrylamide. Examples of the compound having an allyl group include triallylamine. Examples of the compound having an epoxy group include (poly)ethylene glycol diglycidyl ether, (poly)propylene glycol diglycidyl ether, (poly)glycerin diglycidyl ether, and epichlorohydrin. Examples of the compound having an amino group include triethylenetetramine, ethylenediamine, and hexamethylenediamine.

In a case where the amount of the internal crosslinking agent in the monomer aqueous solution is small, there is a tendency that the CRC of the polymer particles is large. From this viewpoint, the amount of the internal crosslinking agent may be 0.02 to 0.4 mmol with respect to 1 mol of the ethylenically unsaturated monomer.

The coarsely crushed product obtained by coarsely crushing the hydrogel-like polymer may be in the form of particles or may have an elongated shape in which a plurality of particles are connected. The minimum width of the coarsely crushed product may be, for example, about 0.1 to 15 mm or 1.0 to 10 mm. The maximum width of the coarsely crushed product may be about 0.1 to 200 mm or 1.0 to 150 mm. Examples of a device for coarsely crushing include a kneader (for example, a pressure type kneader, a double arm type kneader, and the like), a meat chopper, a cutter mill, and a pharma mill.

By drying the coarsely crushed product, most of the water in the coarsely crushed product is removed. The drying method may be, for example, a general method such as natural drying, heating drying, spray drying, freeze drying, or a combination thereof. The coarsely crushed product may be dried under normal pressure or reduced pressure. The heating temperature for drying under normal pressure may be 70°C to 250°C or 80°C to 200°C.

The water content of the dried product (or the polymer particles before being mixed with the crosslinking agent solution) obtained by drying may be, for example, 20% by mass or less, 10% by mass or less, or 5% by mass or less, or may be 1% to 10% by mass. The water content of the dried product as mentioned herein means a ratio of the water amount in the polymer particles to a total mass of the dried product including water. Usually, in a case where a dried product including water is heated at 200°C for 2 hours, a difference in mass of the dried product before and after heating can be regarded as the water amount in the dried product.

A method for pulverizing the dried product is not particularly limited. For example, the dried product can be pulverized using a pulverizer such as a centrifugal pulverizer, a roller mill, a stamp mill, a jet mill, a high-speed rotary pulverizer, and a container-driven mill.

The powder of the polymer particles obtained by pulverization may be classified. Classification means an operation of dividing particle groups (powder) into two or more particle groups having different particle size distributions. A part of the powder of the polymer particles after the classification may be pulverized and classified again.

The classification method is not particularly limited, and may be, for example, screen classification or wind power classification. The screen classification is a method of classifying particles on a screen into particles that pass through a mesh of the screen and particles that do not pass through the mesh by vibrating the screen. The screen classification can be performed using, for example, a vibrating sieve, a rotary shifter, a cylindrical stirring sieve, a blower sifter, or a Ro-tap shaker. The wind power classification is a method of classifying particles using the flow of air.

A medium particle diameter of polymer particles obtained through pulverization and as necessary, classification, before being mixed with a crosslinking agent solution, may be, for example, 180 to 850 $\mu$m.

The centrifuge retention capacity (CRC) of the polymer particles before being mixed with the crosslinking agent solution may be, for example, 40 to 65 g/g, preferably 40 to 62 g/g, and more preferably 40 to 58 g/g from the viewpoint that the strength of the polymer particles is increased and the morphology is easily maintained in the production process after the polymerization step.

In the present specification, the CRC is a value measured in an environment of a temperature of 25°C $\pm$ 2°C and a humidity of 50% $\pm$ 10%. A method for measuring the CRC includes immersing a non-woven fabric bag having a rectangular main surface in 60 mm $\times$ 85 mm, in which polymer particles (or water-absorbent resin particles) having a mass of Mc (g) is stored, in physiological saline at a temperature of 25°C $\pm$ 2°C for 30 minutes to swell the polymer particles, thereby forming a gel; dehydrating the gel in the non-woven fabric bag by applying a centrifugal force of 250 G for 3 minutes by a centrifuge; measuring a mass Ma (g) of the gel and the non-woven fabric bag after the dehydration; and immersing the non-woven fabric bag in which no polymer particles are stored in physiological saline for 30 minutes and then applying a centrifugal force of 250 G by a centrifuge at 3 minutes to dehydrate the non-woven fabric bag; and measuring a mass Mb (g) of the non-woven fabric bag after the dehydration, and calculating a CRC by the following expression:

$$\text{CRC [g/g]} = \{(Ma - Mb) - Mc\}/Mc$$

Mc is 0.2 $\pm$ 0.002 g. As necessary, the physiological saline may be stirred so that the polymer particles absorb up to a limit amount of water while the non-woven fabric bag storing the polymer particles is immersed in the physiological saline. A method for measuring the CRC will be described in more detail in Examples which will be described later.

By reacting the polymer with the surface crosslinking agent in a mixture of the powder of the polymer particles and the crosslinking agent solution, the polymer in the vicinity of the surface of the polymer particles is mainly crosslinked by the surface crosslinking agent. It is preferable that the crosslinking agent solution adheres to the entire surface of the polymer particles as evenly as possible. Thus, water-absorbent resin particles in which the vicinity of the surface is uniformly surface-crosslinked are easily obtained.

The crosslinking agent solution can be a solution containing water and a surface crosslinking agent dissolved in the water. The surface crosslinking agent includes an alkylene carbonate. The alkylene carbonate may be, for example, for example, at least one compound selected from the group consisting of 1,3-dioxolan-2-one (ethylene carbonate), 4-methyl-1,3-dioxolan-2-one (propylene carbonate), 4,5-dimethyl-1,3-dioxolan-2-one 4,4-dimethyl-1,3-dioxolan-2-one, 4-ethyl-1,3-dioxolan-2-one, 4-hydroxymethyl-1,3-dioxolan-2-one (glycerin carbonate), 1,3-dioxan-2-one (trimethylene carbonate), 4-methyl-1,3-dioxan-2-one, 4,6-dimethyl-1,3-dioxan-2-one, and 1,3-dioxepan-2-one, and may be ethylene carbonate.

The content (concentration) of the alkylene carbonate in the crosslinking agent solution may be, for example, 0.1% by mass or more, 0.5% by mass or more, or 0.7% by mass or more, and may be 5.0% by mass or less, 3.0% by mass or less, 2.0% by mass or less, 1.6% by mass or less, or 1.4% by mass or less, with respect to the total amount of the crosslinking agent solution.

The surface crosslinking agent included in the crosslinking agent solution may be substantially an alkylene carbonate alone, and may contain a surface crosslinking agent (another surface crosslinking agent) other than the alkylene carbonate. The ratio of the alkylene carbonate in the surface crosslinking agent may be 50% to 100% by mass, 60% to 100% by mass, 70% to 100% by mass, 80% to 100% by mass, or 90% to 100% by mass with respect to the total mass of the surface crosslinking agent.

Examples of such another surface crosslinking agent include polyol compounds such as ethylene glycol, propylene glycol, 1,4-butanediol, trimethylolpropane, glycerin, polyoxyethylene glycol, polyoxypropylene glycol, and polyglycerin; polyglycidyl compounds such as (poly)ethylene glycol diglycidyl ether, (poly)glycerin diglycidyl ether, (poly)glycerin triglycidyl ether, trimethylolpropane triglycidyl ether (poly)propylene glycol polyglycidyl ether, and (poly)glycerol polyglycidyl ether; haloepoxy compounds such as epichlorohydrin, epibromohydrin, and $\alpha$-methyl epichlorohydrin; isocyanate compounds such as 2,4-tolylene diisocyanate and hexamethylene diisocyanate; oxetane compounds such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds such as 1,2-ethylenebisoxazoline; and hydroxyalkylamide compounds such as bis[N,N-di($\beta$-hydroxyethyl)]adipamide. These other surface crosslinking agents may be used alone or in combination of two or more kinds thereof.

The use amount (total use amount) of the surface crosslinking agent is 0.00110 or less, and may be 0.00108 or less, 0.00106 or less, 0.00100 or less, 0.00090 or less, 0.00080 or less, 0.00070 or less, 0.00060 or less, or 0.00055 or less, with respect to amass of 1 of the total amount of the solid contents of the polymer particles. From the viewpoint that the total of the centrifuge retention capacity and the absorption performance under pressure is more better, the mass ratio of the content of the surface crosslinking agent in the crosslinking agent solution to the mass of the total amount of the solid contents of the polymer particles may be 0.00030 or more, 0.00035 or more, 0.00040 or more, 0.00045 or more, or 0.00050 or more. From the same viewpoint, the mass ratio of the content of the surface crosslinking agent in the crosslinking agent solution to the mass of the total amount of the solid contents of the polymer particles may be, for example, 0.00030 or more and 0.00110 or less, 0.00035 or more and 0.00110 or less, 0.00040 or more and 0.00110 or less, 0.00045 or more and 0.00110 or less, or 0.00050 or more and 0.00110 or less. In the present specification, "the mass of the total amount of the solid contents of the polymer particles" means a mass obtained by subtracting the mass of water included in the polymer particles from the total mass of the polymer particles.

The content (mass) of the alkylene carbonate is 0.009 or more and 0.027 or less with respect to a mass of 1 of water in the crosslinking agent solution. The lower limit value may be, for example, 0.011 or more, 0.013 or more, or 0.015 or more. In addition, the upper limit value may be, for example, 0.025 or less, 0.023 or less, 0.021 or less, 0.019 or less, or 0.017 or less. The content (mass) of the alkylene carbonate with respect to a mass of 1 of water in the crosslinking agent solution may be 0.011 or more and 0.027 or less, 0.013 or more and 0.027 or less, 0.015 or more and 0.027 or less, 0.009 or more and 0.025 or less, 0.011 or more and 0.025 or less, 0.013 or more and 0.025 or less, 0.015 or more and 0.025 or less, 0.009 or more and 0.023 or less, 0.011 or more and 0.023 or less, 0.013 or more and 0.023 or less, 0.015 or more and 0.023 or less, 0.009 or more and 0.021 or less, 0.011 or more and 0.021 or less, 0.013 or more and 0.021 or less, 0.015 or more and 0.021 or less, 0.009 or more and 0.019 or less, 0.011 or more and 0.019 or less, 0.013 or more and 0.019 or less, 0.015 or more and 0.019 or less, 0.009 or more and 0.017 or less, 0.011 or more and 0.017 or less, 0.013 or more and 0.017 or less, or 0.015 or more and 0.017 or less with respect to a mass of 1 of water.

The crosslinking agent solution may substantially contain only the surface crosslinking agent and water, and may further contain components other than the surface crosslinking agent and water. For example, the crosslinking agent solution may further contain a monohydric alcohol. In a case where the crosslinking agent solution contains the monohydric alcohol, the absorption rate of the surface crosslinking agent into the polymer particles is suppressed, and the surface crosslinking agent is easily brought into contact with the entire particles evenly, and also easily brought into contact with the entire surface of each particle evenly. As a result, in a case where the crosslinking agent solution contains a monohydric alcohol, the absorption performance (for example, absorption performance under pressure) of the water-absorbent resin particles is further improved. Examples of the monohydric alcohol include methanol, ethanol, 1-propanol, 2-propanol, 1-butanol, and 2-butanol. The monohydric alcohol may be 2-propanol. In a case where the crosslinking agent solution includes a monohydric alcohol, the content (mass) of the monohydric alcohol may be, for example, 0.05000 or less, 0.03000 or less, or 0.01000 or less, and may be 0.00100 or more, 0.00300 or more, or 0.00500 or more, with respect to a mass of 1 of the total amount of the solid contents of the polymer particles.

The content (mass) of water in the crosslinking agent solution may be 0.02000 or more, 0.03000 or more, 0.04000 or more, 0.05000 or more, 0.06000 or more, 0.07000 or more, 0.08000 or more, or 0.09000 or more with respect to a mass of 1 of the total amount of the solid contents of the polymer particles. The content (mass) of water in the crosslinking agent solution may be 0.20000 or less, 0.15000 or less, 0.12000 or less, 0.10000 or less, 0.08000 or less, 0.06000 or less, or 0.04000 or less with respect to a mass of 1 of the total amount of the solid contents of the polymer particles.

In the above-mentioned crosslinking step, water-absorbent resin particles that are better in terms of a total of the centrifuge retention capacity and the absorption performance under pressure can be produced by adjusting the use amount of the surface crosslinking agent and the ratio of the mass of the alkylene carbonate to the mass of water in the crosslinking agent solution within the above-mentioned range. The mechanism by which such an effect is obtained is not particularly limited, but the following mechanism can be considered. By adjusting the use amount of the surface crosslinking agent and the ratio of the mass of the alkylene carbonate to the mass of water in the crosslinking agent solution within the above-mentioned range, the thickness of the surface crosslinking layer including the surface-crosslinked polymer particles in the polymer particles is controlled within an appropriate range. This is presumed to make the above-mentioned effect produced.

In a method for mixing the crosslinking agent solution with the polymer particles, the crosslinking agent solution may be added dropwise to or sprayed onto the polymer particles. It is preferable to spray the crosslinking agent solution onto the polymer particles from the viewpoint that the polymer particles easily adhere evenly to the entire surface.

The polymer and the surface crosslinking agent included in the polymer particles can be reacted by heating. The heating temperature and the heating time for surface crosslinking are adjusted so that the crosslinking reaction advances appropriately in consideration of the type of the surface crosslinking agent, and the like. For example, the heating temperature for surface crosslinking may be 80°C or higher, 100°C or higher, 120°C or higher, 150°C or higher, or higher than 180°C, and may be 190°C or higher. The heating temperature for surface crosslinking may be 250°C or lower. The heating time for surface crosslinking may be, for example, 5 to 90 minutes.

The surface-crosslinked polymer particles may be further dried or classified, as necessary. Inorganic particles may adhere to the surface of the polymer particles. Examples of the inorganic particles include silica particles such as amorphous silica. It is better not to further pulverize the surface-crosslinked polymer particles. In a case where the surface-crosslinked polymer particles are not further pulverized, it is easy to obtain water-absorbent resin particles (water-absorbent resin particles which are not surface-crosslinked and do not have a fracture surface) in which the vicinity of the surface is evenly surface-crosslinked.

According to the method according to the present embodiment, it is possible to easily obtain water-absorbent resin particles (surface-crosslinked polymer particles) having a large total of a water absorption amount (AUL0.6psi) of physiological saline under a load of 4.14 kPa (CRC + AUL0.6psi), which have been evaluated on the CRC and the absorption performance of the water-absorbent resin particles under pressure. In addition, in one embodiment of the present invention, provided is a method for suppressing a decrease in centrifuge retention capacity and for improving an absorption amount of the water-absorbent resin particles under pressure, and further, improving a total of the centrifuge retention capacity and the absorption performance under pressure, the method including crosslinking a polymer by a surface crosslinking agent by reacting the polymer with the surface crosslinking agent in a mixture of a powder of polymer particles containing the polymer and a crosslinking agent solution containing the surface crosslinking agent and water, in which the surface crosslinking agent includes an alkylene carbonate, a use amount (mass) of the surface crosslinking agent is 0.00110 or less with respect to a mass of 1 of a total amount of solid contents of the polymer particles, and a use amount (mass) of the alkylene carbonate is 0.009 or more and 0.027 or less with respect to a mass of 1 of water in the crosslinking agent solution.

The value of the CRC (unit: g/g) + AUL0.6psi (unit: mL/g) exhibited by the water-absorbent resin particles may be, for example, 56 or more, 58 or more, 60 or more, or 62 or more, and may be 75 or less, 73 or less, or 71 or less. The value of the CRC (unit: g/g) + AUL0.6psi (unit: mL/g) exhibited by the water-absorbent resin particles is practically preferably in the range of 60 to 75.

The CRC of the water-absorbent resin particles may be, for example, 38 g/g or more, 39 g/g or more, 40 g/g or more, 41 g/g or more, or 42 g/g or more, and may be 50 g/g or less, or 45 g/g or less. A method for measuring the CRC will be described in detail in Examples which will be described later. The CRC of the water-absorbent resin particles may be a value measured for a fraction of the powder of the surface-crosslinked polymer particles which have passed through a sieve having an opening of 850 μm.

The AUL0.6psi of the water-absorbent resin particles may be, for example, 20 mL/g or more, or 25 mL/g or more, and may be 45 mL/g or less, 35 mL/g or less, or 30 mL/g or less. A method for measuring the AUL0.6psi will be described in detail in Examples which will be described later.

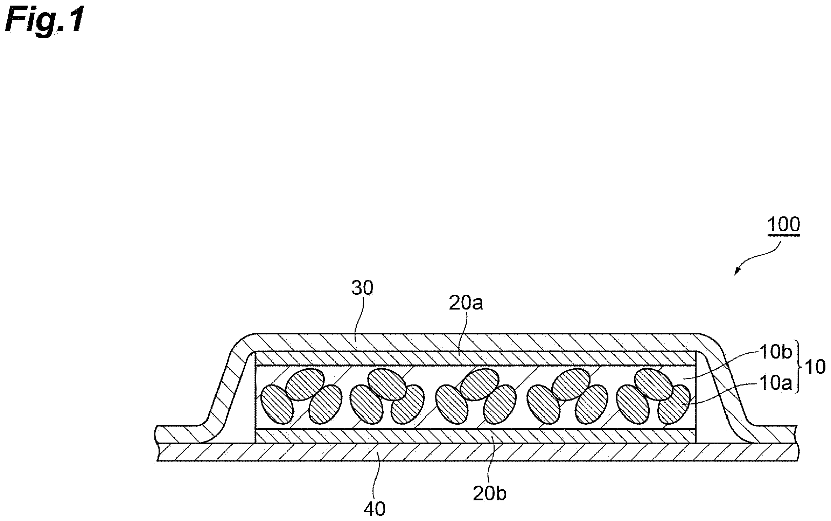

The produced water-absorbent resin particles are used to form an absorber constituting an absorbent article such as a diaper, for example. Fig. 1 is a cross-sectional view showing an example of an absorbent article. An absorbent article 100 shown in Fig. 1 includes a sheet shaped absorber 10, core wraps 20a and 20b, a liquid permeable sheet 30, and a liquid impermeable sheet 40. In the absorbent article 100, the liquid impermeable sheet 40, the core wrap 20b, the absorber 10, the core wrap 20a, and the liquid permeable sheet 30 are laminated in this order. The absorber 10 has water-absorbent resin particles 10a produced by the method according to the above-mentioned embodiment and a fiber layer 10b including a fibrous substance. The water-absorbent resin particles 10a are dispersed in the fiber layer 10b.

**Examples**

Hereinafter, the present invention will be more specifically described with reference to Examples. However, the present invention is not limited to these Examples.

(Production Example 1)

[Preparation of Partially Neutralized Acrylic Acid Liquid]

365.78 (5.08 mol) of acrylic acid was put into a round-bottomed cylindrical separable flask equipped with a stirrer and having an inner diameter of 11 cm and an internal volume of 2 L. 306.48 g of ion-exchanged water was added into the separable flask while stirring the acrylic acid, and then 319.15 g of 48% by mass sodium hydroxide was added dropwise in an ice bath to prepare 991.41 g of a partially neutralized sodium acrylate liquid (neutralization rate: 75% by mole) with a monomer concentration of 45% by mass.

[Polymerization Step]

189.30 g of ion-exchanged water and 0.63 g of polyethylene glycol diacrylate (n ≈ 9) (Tokyo Chemical Industry Co., Ltd., polyethylene glycol diacrylate N = 9) were added to 991.41 g of a partially neutralized sodium acrylate liquid having a monomer concentration of 45% by mass, manufactured above, thereby obtaining a reaction solution (monomer aqueous solution). Subsequently, this reaction solution was supplied to a 3 L-capacity stainless steel double arm type kneader with a jacket having two sigma-type blades with a lid which can be opened and closed, the jacket equipped with a thermometer and a nitrogen blow tube, and subjected to nitrogen gas substitution for 75 minutes in a nitrogen gas atmosphere while maintaining the reaction solution at 25°C. Next, 1.14 g of a 20.00% by mass sodium persulfate aqueous solution and 5.00 g of a 10.00% by mass (2,2'-azobis(2-amidinopropane) dihydrochloride (V-50) (manufactured by FUJIFILM Wako Pure Chemical Corporation) aqueous solution were added to the reaction solution while stirring the reaction solution at a rotation speed of 40 rpm, and after 1 minute from the addition, 2.00 g of a 0.50% by mass L-ascorbic acid aqueous solution and 10.39 g of a 0.35% by mass hydrogen peroxide aqueous solution were added to the reaction solution. After 3 minutes from the addition of the L-ascorbic acid aqueous solution and the hydrogen peroxide aqueous solution, the temperature of the reaction solution started to rise, the polymerization started, and 14 minutes later, the highest temperature during the polymerization was shown to be 37.9°C. Subsequently, stirring was continued while raising the jacket temperature to 60°C or higher, and after 60 minutes from the start of the polymerization, the hydrogel-like polymer was taken out.

[Drying · Pulverization Step]

The obtained hydrogel-like polymer was spread out and disposed on a wire mesh having an opening of 0.8 cm × 0.8 cm, and dried by hot air drying at 180°C for 30 minutes to obtain a dried product. The dried product was pulverized using a centrifugal pulverizer (ZM200 manufactured by Retsch GmbH, screen diameter: 1 mm, and 6,000 rpm). A powder obtained by the pulverization was sieved by shaking for 1 minute using a sieve having an opening of 850 μm and a sieve having an opening of 180 μm. By classification, crosslinked polymer particles (A) were recovered as a fraction which had passed through the sieve in 850 μm and had not passed through the sieve of 180 μm. At this time, the water content of the crosslinked polymer particles (A) was 5.0% by mass.

(Example 1)

[Surface Crosslinking Step]

15 g of crosslinked polymer particles (A) was weighted in a round-bottomed cylindrical separable flask having an inner diameter of 11 cm equipped with an anchor-type stirrer blade made of fluororesin. Subsequently, a total amount of a crosslinking agent solution obtained by mixing 0.015 g of ethylene carbonate (hereinafter also referred to as "EC"), 0.600 g of 2-propanol (hereinafter also referred to as "IPA"), and 0.547 g of deionized water while stirring at 500 rpm was taken with a syringe, a fine atomizer (oral) [manufactured by Yoshikawa Kasei Co., Ltd.] was set at a tip of the syringe, and the crosslinking agent solution was sprayed into a separable flask and stirred for 100 seconds to obtain a mixture. This mixture was heated at 200°C for 40 minutes. After cooling to room temperature, the mixture was classified using a sieve having an opening of 850 μm. By classification, water-absorbent resin particles (water-absorbent resin particles of Example 1) which had passed through a sieve having an opening of 850 μm were obtained. The CRC and the AUL0.6psi of the obtained water-absorbent resin particles were measured.

(Comparative Example 1)

Water-absorbent resin particles of Comparative Example 1 were obtained in the same manner as in Example 1, except that the amount of deionized water was changed to 0.096 g.

(Comparative Example 2)

Water-absorbent resin particles of Comparative Example 2 were obtained in the same manner as in Example 1, except that the amount of deionized water was changed to 0.150 g.

(Example 2)

Water-absorbent resin particles of Example 2 were obtained in the same manner as in Example 1, except that the amount of deionized water was changed to 0.891 g.

(Example 3)

Water-absorbent resin particles of Example 3 were obtained in the same manner as in Example 1, except that the amount of deionized water was changed to 1.500 g.

(Comparative Example 3)

Water-absorbent resin particles of Comparative Example 3 were obtained in the same manner as in Example 1, except that the amount of deionized water was changed to 4.500 g.

(Example 4)

Water-absorbent resin particles of Example 4 were obtained in the same manner as in Example 1, except that the amount of 2-propanol was changed to 0.075 g and the amount of deionized water was changed to 0.891 g.

(Example 5)

Water-absorbent resin particles of Example 5 were obtained in the same manner as in Example 1, except that the amount of ethylene carbonate was changed to 0.0075 g and the amount of deionized water was changed to 0.510 g.

(Comparative Example 4)

Water-absorbent resin particles of Comparative Example 4 were obtained in the same manner as in Example 1, except that the amount of ethylene carbonate was changed to 0.0075 g and the amount of deionized water was changed to 0.891 g.

(Example 6)

Water-absorbent resin particles of Example 6 were obtained in the same manner as in Example 1, except that the amount of ethylene carbonate was changed to 0.0113 g and the amount of deionized water was changed to 0.891 g.

(Example 7)

Water-absorbent resin particles of Example 7 were obtained in the same manner as in Example 1, except that a crosslinking agent solution obtained by mixing 0.015 g of ethylene carbonate and 0.547 g of deionized water was used.

(Example 8)

Water-absorbent resin particles of Example 8 were obtained in the same manner as in Example 1, except that a crosslinking agent solution obtained by mixing 0.0075 g of ethylene carbonate, 0.600 g of 2-propanol, 0.0075 g of propylene glycol (hereinafter also referred to as "PG"), and 0.510 g of deionized water was used.

(Production Example 2)

[Polymerization Step]

93.48 g (1.30 mol) of acrylic acid was put into a separable flask having an internal volume of 2 L. 78.32 g of ion-exchanged water was added to the acrylic acid in the separable flask while stirring. Subsequently, 81.56 g of 48% by mass sodium hydroxide was added dropwise thereto in an ice bath to prepare a partially neutralized sodium acrylate liquid having a monomer concentration of 45% by mass, in which 75% by mole of the acrylic acid was neutralized.

253.36 g of the prepared partially neutralized sodium acrylate liquid, 46.73 g of ion-exchanged water, and 0.17 g of polyethylene glycol diacrylate (Tokyo Chemical Industry Co., Ltd., polyethylene glycol diacrylate N ≈ 9) as an internal crosslinking agent were put into a fluororesin-coated circular aluminum vat (diameters of an opening part and bottom surface: 150 mm, and height: 60 mm). One stirring bar (a diameter of 8 mm, a length of 30 mm, and no ring) was installed at the central portion of the circular vat and stirred to form a uniform liquid mixture (monomer aqueous solution). A thermometer for measuring the temperature of the mixture was installed at a position at a distance of 3 cm from the central portion in the aluminum vat. Subsequently, the opening of the aluminum vat was covered with a polyethylene film. After adjusting the temperature of the mixture to 25°C, a nitrogen gas was bubbled from the tube inserted into the mixture, whereby nitrogen substitution was performed in the reaction system until the amount of dissolved oxygen reached 0.1 ppm or less. Next, while stirring the mixture at 500 rpm, the tube for nitrogen substitution was removed from the reaction system, 0.15 g of a 20% by mass sodium persulfate aqueous solution and 0.64 g of a 10% by mass (2,2'-azobis(2-amidinopropane) dihydrochloride (V-50) aqueous solution (manufactured by FUJIFILM Wako Pure Chemical Corporation) were added to the reaction solution, and 1 minute after the addition, 0.26 g of a 0.50% by mass L-ascorbic acid aqueous solution and 1.33 g of a 0.35% by mass hydrogen peroxide aqueous solution were added dropwise to the mixture in the aluminum vat using a syringe (3 mL-capacity disposable syringe manufactured by HENKE SASS WOLF, injection needle manufactured by Terumo Corporation).

The polymerization reaction started immediately after the dropwise addition of the hydrogen peroxide aqueous solution. Stirring was stopped after 1 minute from the completion of the dropwise addition of the hydrogen peroxide aqueous solution. After the viscosity of the reaction solution increased with the advance of the polymerization reaction, the mixture was gelled. A thermometer for measuring the temperature of the mixture when 6 minutes has passed since the completion of the dropping of the hydrogen peroxide solution showed a maximum value of 75°C. Subsequently, an aluminum vat having water and a hydrogel-like polymer including a polymer, which was formed by gelation of the reaction solution, was immersed in a water bath at 75°C, and in that state, the hydrogel-like polymer was aged for 20 minutes.

[Coarsely Crushing Step]

The hydrogel-like polymer, which was a gelled mixture, was taken out from the aluminum vat and immediately cut to a width of about 5 cm. The cut hydrogel-like polymer was coarsely crushed by a meat chopper (12VR-750SDX manufactured by Kiren Royal Co., Ltd.). A coarsely crushed product including an elongated structure of the hydrogel-like polymer was discharged from a plurality of circular discharge holes of a plate mounted at an end portion of a kneading chamber of a meat chopper. The diameter of the discharge hole was 6.4 mm. Coarse crushing with the meat chopper was continued for 3 minutes from the injection of the hydrogel-like polymer. The obtained coarsely crushed product was an aggregate formed of a plurality of elongated structures having a width of 4 to 6 mm.

[Drying · Pulverization Step]

The obtained coarsely crushed product was spread out and disposed on a wire mesh having an opening of 0.8 cm × 0.8 cm, and dried by hot air drying at 180°C for 30 minutes to obtain a dried product. The dried product was pulverized using a centrifugal pulverizer (ZM200 manufactured by Retsch GmbH, screen diameter: 1 mm, and 6,000 rpm). A powder obtained by the pulverization was sieved by shaking for 1 minute using a sieve having an opening of 850 $\mu$m and a sieve having an opening of 180 $\mu$m. By classification, crosslinked polymer particles (B) were recovered as a fraction which had passed through a sieve of 850 $\mu$m and had not passed through the sieve of 180 $\mu$m. At this time, the water content of the crosslinked polymer particles (B) was 5.0% by mass.

(Example 9)

Water-absorbent resin particles of Example 9 were obtained in the same manner as in Example 2, except that the crosslinked polymer particles (B) were used.

<Centrifuge Retention Capacity (CRC)>

The centrifuge retention capacity (CRC) was measured by the following procedure with reference to the EDANA method (NWSP 241.0.R2 (15), page. 769 to 778). The measurement was performed in an environment at a temperature of 25°C $\pm$ 2°C and with a humidity of 50% $\pm$ 10%.

A non-woven fabric with a size of 60 mm × 170 mm (product name: Heat Pack MWA-18 manufactured by Nippon Paper Papylia Co., Ltd.) was folded into a half in the longitudinal direction to adjust the size into 60 mm × 85 mm. Both sides of the non-woven fabric extending in the longitudinal direction were pressure-bonded to each other with a heat seal to produce a non-woven fabric bag of 60 mm × 85 mm (where the pressure-bonded portions having the width of 5 mm were formed on both sides along the longitudinal direction). 0.2 g of the water-absorbent resin particles was precisely weighed and stored in the non-woven fabric bag. Thereafter, a remaining side extending in a lateral direction was pressure-bonded through heat seal, thereby closing the non-woven fabric bag.

In a state where the non-woven fabric bag was not folded, the non-woven fabric bag was floated on 1,000 g of physiological saline at a liquid temperature of 25°C $\pm$ 2°C stored in a vat made of stainless steel (240 mm × 320 mm × 45 mm) to completely moisten the entire non-woven fabric bag. After one minute from the injection of the non-woven fabric bag in physiological saline, the non-woven fabric bag was immersed in the physiological saline with a spatula to obtain a non-woven fabric bag in which the gel was stored.

After 30 minutes from the injection of the non-woven fabric bag in physiological saline (a total of 1 minute of the floating time and 29 minutes of the immersion time), the non-woven fabric bag was taken out from the physiological saline. In addition, the non-woven fabric bag was put in a centrifuge (manufactured by KOKUSAN Co., Ltd., model number: H-122). After the centrifugal force in the centrifuge reached 250 G, dehydration of the non-woven fabric bag was performed for 3 minutes. After the dehydration, a mass Ma [g] of the non-woven fabric bag containing the mass of the gel was weighed. The non-woven fabric bag was subjected to the same operation as the above-mentioned operation without storing the water-absorbent resin particles to measure the mass Mb [g] of the non-woven fabric bag after the dehydration. A CRC [g/g] was calculated based on the following expression. The Mc [g] is a precision value of 0.2 g of the mass of the water-absorbent resin particles used for the measurement.

$$CRC \ [g/g] = \{(Ma - Mb) - Mc\}/Mc$$

[Measurement of Water Absorption Amount for Physiological Saline under Load of 4.14 kPa (AUL0.6psi)]

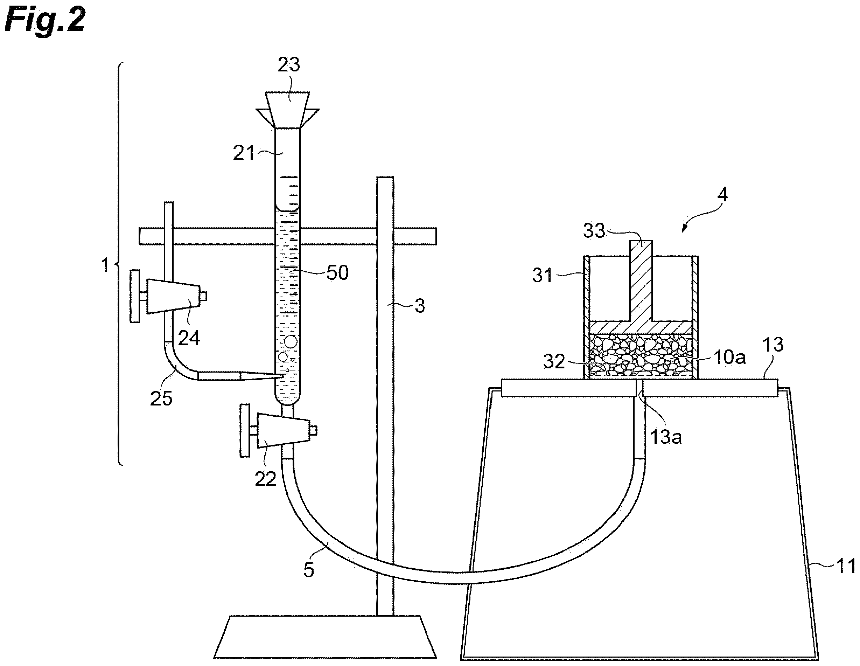

The absorption performance of the water-absorbent resin particles under pressure was evaluated by the water absorption amount for physiological saline under a load of 4.14 kPa. A water absorption amount for physiological saline under a load of 4.14 kPa was measured using a measurement device schematically shown in Fig. 2. The measurement device includes a burette unit 1, a clamp 3, a conduit 5, a stand 11, a measurement table 13, and a measurement unit 4 placed on the measurement table 13. The burette unit 1 has a burette tube 21 on which a scale is engraved, a rubber stopper 23 for sealing the opening at the upper part of the burette tube 21, a cock 22 connected to the tip end of the lower part of the burette tube 21, an air introduction tube 25 connected to the lower part of the burette tube 21, and a cock 24. The burette unit 1 is fixed by the clamp 3. The flat plate-shaped measurement table 13 has a through hole 13a having the diameter of 2 mm and formed in the central portion thereof, and is supported by the height-variable stand 11. The through hole 13a of the measurement table 13, and the cock 22 of the burette unit 1 are connected by the conduit 5. The inner diameter of the conduit 5 is 6 mm.

The measurement unit 4 has a cylinder 31 made of plexiglass, a polyamide mesh 32 adhering to one opening part of the cylinder 31, and a weight 33 that can move up and down in the cylinder 31. The cylinder 31 was placed on the measurement table 13 with the polyamide mesh 32 therebetween. The inner diameter of the cylinder 31 is 20 mm. The opening of the polyamide mesh 32 is 75 $\mu$m (200 mesh). The weight 33 has a diameter of 19 mm and a mass of 119.6 g, and can apply a load of 4.14 kPa (0.6 psi) to the water-absorbent resin particles 10a uniformly disposed on the polyamide mesh 32 as described later.

The measurement of a water-absorbing ability for physiological saline under a load of 4.14 kPa was performed in a room at 25°C by using the measurement device shown in Fig. 2. First, the cock 22 and the cock 24 of the burette unit 1 were closed, and a 0.9% by mass physiological saline that had been adjusted to 25°C was put into the burette tube 21 through the opening at the upper part of the burette tube 21. Subsequently, the opening at the upper part of the burette tube 21 was sealed with the rubber stopper 23, and then the cock 22 and the cock 24 were opened. The inside of the conduit 5 was filled with the 0.9% by mass saline solution 50 to prevent air bubbles from entering. The height of the measurement table 13 was adjusted so that the height of the water surface of the 0.9% by mass saline solution reached the inside of the through hole 13a was the same as the height of the upper surface of the measurement table 13. At this time, it was confirmed that the same volume of air as the 0.9% by mass saline solution 50 sucked out from the through hole 13a was promptly supplied into the burette through the air introduction tube 25. After the adjustment, the height of the water surface of the physiological saline 50 in the burette tube 21 was read by the scale on the burette tube 21, and this position was defined as a zero point (value read at 0 seconds).

In the measurement unit 4, 0.10 g of the water-absorbent resin particles 10a was uniformly disposed on the polyamide mesh 32 in the cylinder 31, the weight 33 was disposed on the water-absorbent resin particles 10a, and the cylinder 31 was installed such that the central portion thereof coincided with a conduit port at the central portion of the measurement table 13. An amount of decrease Wc (ml) in the physiological saline in the burette tube 21 60 minutes after the water-absorbent resin particles 10a started absorbing the physiological saline through the conduit 5 (that is, an amount of the physiological saline absorbed by the water-absorbent resin particles 10a) was read, and a water-absorbing ability of the water-absorbent resin particles 10a for the physiological saline under a load of 4.14 kPa was calculated by the following formula. The results are shown in Table 1.

$$\text{Water-absorbing ability (ml/g) for physiological saline under}$$
$$\text{load of 4.14 kPa} = Wc \ (ml)/\text{mass of water-absorbent resin particles (g)}$$

<Water Content>

2.0 g of the crosslinked polymer particles is preliminarily put into an aluminum foil case (No. 8) having a constant weight (W1 (g)), the mouth of the aluminum foil case is lightly closed, and a total mass W2 (g) of the aluminum foil case including the sample is precisely weighed. The above-mentioned aluminum foil case including the sample is dried for 2 hours with a hot air dryer (manufactured by ADVANTEC, model: FV-320) whose internal temperature is set to 200°C. The dried aluminum foil case including the sample is left to be cooled to room temperature in a desiccator. A total mass W3 (g) of the aluminum foil case including the sample after being cooled is measured. The water content of the sample is calculated from the following expression.

$$\text{Water content [\% by mass]} = [\{(W2 - W1) - (W3 - W1)\}/(W2 - W1)] \times 100$$

[Table 1]

| No. | CRC [g/g] of particles before surface crosslinking | Composition of crosslinking agent solution | | | | Mass ratio of surface crosslinking agent/(solid content of polymer particles) | Mass ratio of EC/water | Performance of particles after surface crosslinking 850 μm pass | | |
|---|---|---|---|---|---|---|---|---|---|---|
| | | Amount [g] of EC | Amount [g] of water | Amount [g] of IPA | Amount [g] of PG | | | CRC [g/g] | AUL0.6psi [mL/g] | CRC + AUL0.6psi |
| Comparative Example 1 | 45 | 0.015 | 0.096 | 0.600 | 0 | 0.001053 | 0.156 | 39 | 12 | 51 |
| Comparative Example 2 | | 0.015 | 0.150 | 0.600 | 0 | 0.001053 | 0.100 | 38 | 16 | 54 |
| Example 1 | | 0.015 | 0.547 | 0.600 | 0 | 0.001053 | 0.027 | 40 | 30 | 70 |
| Example 2 | | 0.015 | 0.891 | 0.600 | 0 | 0.001053 | 0.017 | 38 | 30 | 68 |
| Example 3 | | 0.015 | 1.500 | 0.600 | 0 | 0.001053 | 0.010 | 38 | 29 | 67 |
| Comparative Example 3 | | 0.015 | 4.500 | 0.600 | 0 | 0.001053 | 0.003 | 38 | 10 | 48 |
| Example 4 | | 0.015 | 0.891 | 0.075 | 0 | 0.001053 | 0.017 | 42 | 26 | 68 |
| Example 5 | | 0.0075 | 0.510 | 0.600 | 0 | 0.000526 | 0.015 | 42 | 29 | 71 |
| Comparative Example 4 | | 0.0075 | 0.891 | 0.600 | 0 | 0.000526 | 0.008 | 46 | 9 | 55 |
| Example 6 | | 0.0113 | 0.891 | 0.600 | 0 | 0.000789 | 0.013 | 41 | 27 | 68 |
| Example 7 | | 0.015 | 0.547 | 0 | 0 | 0.001053 | 0.017 | 41 | 24 | 65 |
| Example 8 | | 0.0075 | 0.510 | 0.600 | 0.0075 | 0.001053 | 0.015 | 39 | 27 | 66 |
| Example 9 | 56 | 0.015 | 0.891 | 0.600 | 0 | 0.001053 | 0.017 | 42 | 27 | 69 |

The results are shown in Table 1. In Table 1, "Mass ratio of surface crosslinking agent/(solid content of polymer particles)" indicates the use amount (mass) of the surface crosslinking agent in the crosslinking agent solution with respect to a mass of 1 of the total amount of the solid contents of the polymer particles, and "Mass ratio of EC/water" indicates a ratio of the mass of ethylene carbonate to the mass of water in the crosslinking agent solution. In each of Examples, it was confirmed that particles after surface crosslinking (water-absorbent resin particles) capable of generally exhibiting a suppression of a decrease in CRC and an improvement of AUL0.6psi, that is, having an improvement of a total of the centrifuge retention capacity and the absorption performance under pressure can be obtained.

Reference Signs List

1: burette unit,
3: clamp,
4: measurement unit,
5: conduit,
10: absorber,
10a: water-absorbent resin particle,
10b: fiber layer,
11: stand,
13: measurement table,
13a: through hole,
20a, 20b: core wrap,
21: burette tube,
22: cock,
23: rubber stopper,
24: cock,
25: air introduction tube,
30: liquid permeable sheet,
31: cylinder,
32: polyamide mesh,
33: weight,
40: liquid impermeable sheet,
50: physiological saline,
100: absorbent article

**Claims**

1. A method for producing water-absorbent resin particles including polymer particles, the method comprising:

   crosslinking a polymer by a surface crosslinking agent by reacting the polymer with the surface crosslinking agent in a mixture of a powder of polymer particles comprising the polymer and a crosslinking agent solution comprising the surface crosslinking agent and water,
   wherein the surface crosslinking agent comprises an alkylene carbonate,
   a use amount (mass) of the surface crosslinking agent is 0.00110 or less with respect to a mass of 1 of a total amount of solid contents of the polymer particles, and
   a content (mass) of the alkylene carbonate is 0.009 or more and 0.027 or less with respect to a mass of 1 of water in the crosslinking agent solution.

2. The method according to claim 1,
   wherein the use amount (mass) of the surface crosslinking agent is 0.00030 or more and 0.00110 or less with respect to the mass of 1 of the total amount of the solid contents of the polymer particles.

3. The method according to claim 1 or 2,
   wherein the crosslinking agent solution comprises a monohydric alcohol.

4. The method according to any one of claims 1 to 3,

wherein the alkylene carbonate is ethylene carbonate.

5. A method for suppressing a decrease in centrifuge retention capacity of water-absorbent resin particles comprising polymer particles and for improving an absorption amount of the water-absorbent resin particles under pressure, the method comprising:

crosslinking a polymer by a surface crosslinking agent by reacting the polymer with the surface crosslinking agent in a mixture of a powder of polymer particles comprising the polymer and a crosslinking agent solution comprising the surface crosslinking agent and water,
wherein the surface crosslinking agent comprises an alkylene carbonate,
a use amount (mass) of the surface crosslinking agent is 0.00110 or less with respect to a mass of 1 of a total amount of solid contents of the polymer particles, and
a content (mass) of the alkylene carbonate is 0.009 or more and 0.027 or less with respect to a mass of 1 of water in the crosslinking agent solution.

EP 4 289 888 A1

**Fig.1**

**Fig.2**

## INTERNATIONAL SEARCH REPORT

| International application No. |
|---|
| **PCT/JP2022/006469** |

**A.    CLASSIFICATION OF SUBJECT MATTER**

*C08J 3/24*(2006.01)i; *B01J 20/26*(2006.01)i; *B01J 20/30*(2006.01)i
FI:    C08J3/24 CEY; B01J20/26 D; B01J20/30

According to International Patent Classification (IPC) or to both national classification and IPC

**B.    FIELDS SEARCHED**

Minimum documentation searched (classification system followed by classification symbols)

C08J3/00-3/28; C08J99/00; B01J20/26; B01J20/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | US 2020/0009529 A1 (LG CHEM, LTD.) 09 January 2020 (2020-01-09) comparative example 1, table 1 | 1-5 |
| X | WO 2019/190120 A1 (LG CHEM, LTD.) 03 October 2019 (2019-10-03) comparative example 3 | 1-2, 4 |
| A | | 3, 5 |
| A | WO 2020/122442 A1 (LG CHEM, LTD.) 18 June 2020 (2020-06-18) example 1 | 1-5 |
| A | JP 2021-504519 A (LG CHEM, LTD.) 15 February 2021 (2021-02-15) comparative example 3 | 1-5 |
| A | JP 5250204 B2 (NIPPON SHOKUBAI CO., LTD.) 31 July 2013 (2013-07-31) examples 7-8 | 1-5 |

☐ Further documents are listed in the continuation of Box C.        ☑ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **18 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/006469**

| Patent document cited in search report | | | Publication date (day/month/year) | Patent family member(s) | | | Publication date (day/month/year) |
|---|---|---|---|---|---|---|---|
| US | 2020/0009529 | A1 | 09 January 2020 | WO | 2018/070622 | A1 | |
| | | | | EP | 3375810 | A1 | |
| | | | | KR | 10-2018-0040404 | A | |
| | | | | CN | 108463490 | A | |
| WO | 2019/190120 | A1 | 03 October 2019 | US | 2021/0009725 comparative example 3 | A1 | |
| | | | | EP | 3757153 | A1 | |
| | | | | KR | 10-2019-0114777 | A | |
| | | | | CN | 111902463 | A | |
| WO | 2020/122442 | A1 | 18 June 2020 | JP | 2021-510396 example 1 | A | |
| | | | | US | 2020/0368722 | A1 | |
| | | | | EP | 3719059 | A1 | |
| | | | | KR | 10-2020-0073358 | A | |
| | | | | CN | 111670210 | A | |
| JP | 2021-504519 | A | 15 February 2021 | US | 2021/0113989 comparative example 3 | A1 | |
| | | | | WO | 2019/117511 | A1 | |
| | | | | EP | 3705510 | A1 | |
| | | | | KR | 10-2019-0069297 | A | |
| | | | | CN | 111448241 | A | |
| JP | 5250204 | B2 | 31 July 2013 | US | 2009/0008604 examples 7-8 | A1 | |
| | | | | WO | 2006/109844 | A1 | |
| | | | | EP | 1874863 | A1 | |
| | | | | CN | 101155870 | A | |
| | | | | TW | 200635969 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020516753 A